# EUROPEAN PATENT SPECIFICATION

(11) **EP 3 785 093 B1**
(45) Date of publication and mention of the grant of the patent: **07.06.2023**
(21) Application number: 19791804.8
(22) Date of filing: 26.04.2019
(51) Int. Cl.: G05D 1/02, G01C 21/00, G01C 21/20, G06V 20/20, G06V 20/64

(54) **ROBOT CONTEXTUALIZATION OF MAP REGIONS**
ROBOTERKONTEXTUALISIERUNG VON KARTENBEREICHEN
CONTEXTUALISATION ROBOTISÉE DE RÉGIONS DE CARTE

(30) Priority: 26.04.2018 US 201862663143 P; 25.04.2019 US 201916394767
(43) Date of publication of application: 03.03.2021
(73) Proprietor: Tailos, Inc., Austin, TX 78744 (US)
(72) Inventor: MORONITI, David, Austin, TX 78744 (US); SWEET, Nicholas, Austin, TX 78744 (US); GREEN, Micah, Estis, Austin, TX 78744 (US)
(74) Representative: DREISS Patentanwälte PartG mbB
(86) International application number: PCT/US2019/029335
(87) International publication number: WO 2019/210157

(56) References cited:
- WO-A1-2018/038553
- US-A1- 2017 225 336
- US-A1- 2017 312 916
- US-A1- 2018 074 508
- US-A1- 2018 079 085
- US-B1- 9 844 879
- ALI GURCAN OZKIL ET AL: "Practical indoor mobile robot navigation using hybrid maps", MECHATRONICS (ICM), 2011 IEEE INTERNATIONAL CONFERENCE ON, IEEE, 13 April 2011 (2011-04-13), pages 475-480, XP031911353, DOI: 10.1109/ICMECH.2011.5971333 ISBN: 978-1-61284-982-9

## Description

### CROSS REFERENCE TO RELATED APPLICATIONS

This application claims the benefit of and priority to U.S. Provisional Application No. 62/663,143, filed April 26, 2018.

### BACKGROUND

This disclosure relates generally to mobile robotics, and more specifically, to the contextualization of map regions by robots. US 9,844,879 B1 discloses a system and a method for utilizing non-local information to constrain robot services.

Blueprint maps are useful for determining a general layout of a building or area, but without further information, may be limited in usefulness to a robot attempting to navigate based on the maps. A robot often needs additional context to demarcate regions within a map through which the robot can travel, and regions the robot should avoid. Further, the location of objects, obstacles, and other entities within the building or area can change over time, and thus a map of the building or area may become outdated over time.

### BRIEF DESCRIPTION OF THE DRAWINGS

Fig. 1 illustrates an example environment in which a mobile robot can operate, according to one embodiment.
Fig. 2 is a system-level diagram that illustrates an example embodiment of a robot.
Fig. 3A is a flow chart illustrating the generation of a localization map, according to one embodiment.
Fig. 3B is a flow chart illustrating the generation of contextual map layers, according to one embodiment.
Fig. 4 is a flow chart illustrating a process for a robot to perform a task and update a contextual map, according to one embodiment.
Figs. 5A-5F illustrate examples of contextualized maps, according to various embodiments.

### DETAILED DESCRIPTION

### Environment Overview

Embodiments described herein detail functionality associated with a mobile robot. Mobile robots can include a number of sensors, data retrieval systems, communication systems, and other components as described in greater detail below. Accordingly, a mobile robot can access data associated with or describing an environment in which the robot operates, for instance from the on-board sensors, from a data source external to the robot, or from a human operator. In response to or based on the accessed data, the mobile robot can perform a number of functionalities, either autonomously or in response to operator input. It should be noted that while the mobile robot is described herein as operating in an indoor environment and performing various housekeeping functions, in other embodiments the mobile robot can operate in other environments and can perform other functions while adhering to the principles described herein.

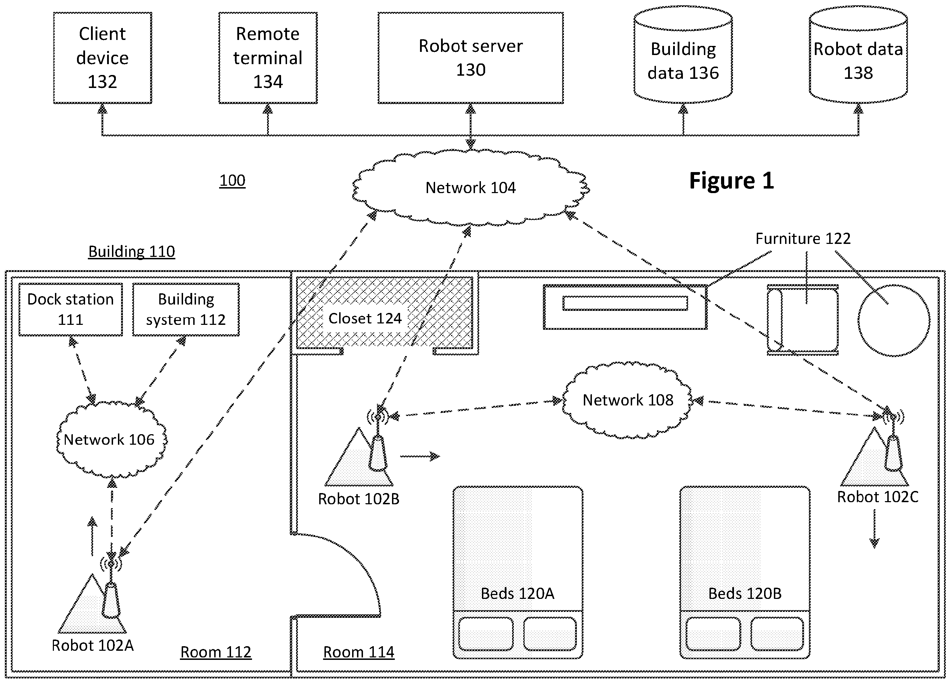

Fig. 1 illustrates an example environment 100 in which a mobile robot can operate, according to one embodiment. The environment includes three mobile robots including robot 102A, robot 102B, and robot 102C (collectively "robots 102"), operating within a building 110. The building 110 includes two rooms: room 112 and room 114. In an example embodiment, the room 112 is a hotel hallway and the room 114 is a hotel bedroom. In such embodiments, the robots 102 can perform housekeeping or other operations within the rooms 112 and 114, as described herein.

The robots 102 can wirelessly communicate with a robot server 130 via a first network 104. Likewise, the robot server 130 and/or the robots 102 (via the robot server 130) can communicate with one or more of a client device 132, a remote terminal 134, a building database 136, and a robot database 138 via the first network 104. The robots 102 can also communicate with building infrastructure, such as the dock station 111 and the building station 112, via the second network 106. Further, the robots 102 can communicate with each other via the third network 106. It should be noted that although three distinct networks are illustrated in the embodiment of Fig. 1, in other embodiments, the robots can communicate via fewer or more networks, or one or more of the networks 104, 106, and 108 can be the same network. It should be noted that although the term "robot server" is used herein, in practice, the robot server 130 can be any server, any computing device, or any system with which the robots 102 can communicate and configured to perform the functionality described herein.

The networks 104, 106, and 108 can each include one or more networks, including, but not limited to, wireless networks (e.g., wireless communication networks), mobile telephone networks (e.g., cellular telephone networks), closed communication networks, open communication networks, satellite networks, navigation networks, broadband networks, narrowband networks, the Internet, local area networks, and any other networks capable of carrying data and/or communications signals between the robots 102, building infrastructure, the robot server 130, and any other systems or components (including but not limited to the client device 132, the remote terminal 134, the building database 136, and the robot database 138). For instance, the network 104 can include the Internet, and the robots 102 can interface with the Internet via WiFi. Likewise, the network 106 can be a Bluetooth or Bluetooth Low Energy (BLE) wireless network, enabling the robot 102A to communicate with the dock station 111 and the building system 112 when within a communication threshold proximity of either system. Finally, the network 108 can be a long-distance communicative network, enabling the robots to communicate as a point-to-point network, for instance using GSM transceivers.

The robots 102 can navigate within the building 110, for instance by autonomously planning a route through the building, by following a pre-determined route, or by modifying a route based on the detected environment in which the robot is navigating. In some embodiments, the robots 102 can navigate collectively, for instance by individually selecting a route such that a collective goal is achieved. For example, if the robots 102 are tasked with vacuuming the entirety of the building 110, the robots 102 can each select a route that minimizes an amount of time it takes the robots 102 to entirely vacuum the building, or can select routes that maximize an amount of time each robot 102 is vacuuming a portion of the building floor that has yet to be vacuumed. Likewise, if the robots 102 are tasked with mapping an entirety of the floorplan of the building 110, each robot 102 can individually select a route that minimizes an amount of time it takes the robots 102 to view the floorplan. The robots 102 can communicate with each other via the network 108 or via the robot server 130 in order to coordinate route selection.

The robots 102 can also navigate independently, for instance to complete a task assigned to the robot 102 (such as individually vacuuming or mapping a space, identifying anomalies within a room, identifying other tasks that need to be performed, etc.) In some embodiments, a robot 102 can select a route that minimizes a transit time from a first location to a second location, that minimizes travel through unknown locations or that avoids keepout regions altogether, or that guarantees that the robot 102 can navigate to a power dock station 111 before it runs out of power. For example, in the embodiment of Fig. 1, the room 114 includes the beds 120A and 120B, the furniture 122, and the closet 124. In this embodiment, the robot 102B can access a map (for instance, from the building database 136) to identify the locations of these objects within the room 114, or can identify the locations of these objects using object detection functionality (such as a camera and/or depth sensor), and can select a route around these objects based the identified locations. Likewise, as discussed below, the robot 102B can identify the closet 124 as a region in which the robot 102B is unable to or unlikely to be able to navigate within using a keepout or contextualized map, and can avoid navigating into or within the closet 124 in response.

In some embodiments, one or more rooms within the building 110 can include a dock station 111. The dock station 111 can electrically couple to a robot 102, for instance when the robot 102 drives up to a dock station base and physically couples to a dock station power outlet or connector. In some embodiments, the robot 102 can select a route to the dock station 111 when the power available to the robot 102 falls below a threshold, or can automatically return to a dock station 111 when a particular task is completed. In some embodiments, the robots 102 can remain at a dock station 111 until a subsequent task is assigned to the robot 102, until a subsequent periodic task is to be performed, and the like. In some embodiments, the dock station 111 can also act as an access point, enabling communications between the robots 102 and one or more systems external to the robot 102. Likewise, the dock station 111 may be able to perform a diagnostic check of one or more robot components or systems, and can communicate this information to an external system (e.g., the robot server 130).

The building system 112 can include any system capable of wirelessly communicating with a robot 102, such as a fire detector system, a wireless modem, a thermostat, a clock, an entertainment system, a smart lighting system, an elevator, a housekeeping or front desk computer, or the like. A robot 102 can communicate with the building system 112, for instance by receiving information or instructions from the building system 112 or by providing information or instructions to the building system 112. For instance, the robot 102 may determine that the beds 120A and 120B in the room 114 need to be made, and can instruct a housekeeping computer (e.g., a client device 132) to schedule the room for housekeeping. Likewise, the robot 102 can determine that the temperature within the room 114 is above a comfort threshold, and can instruct a thermostat to reduce the temperature. It should be noted that in some embodiments, the building system 112 does not wirelessly communicate with the robot 102, and instead the robot 102 can determine information displayed by or otherwise conveyed by the building system 112. For instance, the robot can capture an image of a thermostat display in order to determine a temperature of a room, or can capture an image of a room number to identify a room.

The robot server 130, the client device 132, the remote terminal 134, the building database 136, and the robot database 138 are computing systems configured to communicate with each other and with one or more robots 102 and/or building infrastructure via the network 104 or one or more other networks. In some embodiments, fewer, additional, or different computing systems are included within the environment 100 than those shown in Fig. 1. Further, one or more of the computing systems of Fig. 1 can be combined (such as the remote terminal 134 and the client device 132). Although the computing systems of Fig. 1 are illustrated as external to the building 110, in practice these computing systems can be located in any suitable location, including within the building, within a different building, in a datacenter, in the possession of an operator or user, and the like.

The robot server 130 provides a communicative interface between the robots 102 and one or more other systems of Fig. 1. For instance, the robot server 130 can provide an instruction to a robot 102 to vacuum the room 114, can receive a request for floorplan data from the robot 102 in response to the instruction, can access the floorplan data from the building database 136 and provide the floorplan to the robot 102, and can receive diagnostic information from the robot 102 indicating that a repair to the robot 102 is needed and provide the diagnostic information to a client device of hotel staff. In some embodiments, the robot server 130 is a cloud server, enabling long distance operation of and communication with the robots 102.

The client device 132 is a computing system, such as a mobile phone, a desktop computer, a tablet, and the like enabling an operator to interface with the robots 102. For instance, video captured by a robot 102 can be provided to the robot server 130 and routed to a client device 132 for viewing by an operator. In some embodiments, the environment 100 of Fig. 1 can include any number of client devices 132, each assigned to a particular operator. In such embodiments, data received from the robots 102 by the robot server 130 can be routed to the appropriate client device 132. For instance, if the robot server 130 receives an indication from a robot 102 that a particular hallway needs to be cleared of debris, the robot server 130 can provide the indication to the client device 132 operated by housekeeping staff. Likewise, if the robot server 130 receives an indication that a pipe is leaking, the robot server 130 can provide the indication to the client device 132 operated by maintenance staff. Operators can provide instructions to the robots 102 via the robot server 130 from the client devices 132. For example, housekeeping staff can use a mobile phone client device to provide an instruction to the robot 102 to vacuum room 114, and the robot 102 can navigate to the room 114 and begin vacuuming in response to receiving the instruction.

The remote terminal 134 includes an interface displayed to an operator via a device display, such as a mobile device, computer monitor, and the like. As noted above, in some embodiments, the remote terminal is displayed via a client device 132, though in other embodiments, the remote terminal is displayed within dedicated hardware. Information received from a robot 102 (for instance, via the robot server 130) can be displayed within the remote terminal interface, such as video or images captured by the robot 102, diagnostic information associated with a robot 102, a map indicating a route being navigated by the robot 102, a map indicating a location of the robot 102 received from the robot 102, a map allowing an operator to configure a route of the robot 102, a set of displayed instruction elements that (when selected) can configure the behavior of the robot to perform one or more tasks, or any other suitable information associated with the robot 102, the building, or one or more other systems or components of Fig. 1. The remote terminal 134 can enable an operator to provide instructions to one or more robots 102 by interacting with the remote terminal interface. For instance, an operator can select a room (such as room 112) from a map interface displayed within the remote terminal interface, can select a robot (such as robot 102A) from a list or set of corresponding robot icons displayed within the remote terminal interface, and can select an interface element corresponding to a particular task (such as vacuuming) in order to instruct robot 102A to vacuum room 112.

The building database 136 includes data associated with the building 110, such as a floorplan of the building, a location of objects within the building 110, a location of doors and windows within the building 110, information associated with building infrastructure, a schedule associated with the building 110, building occupancy or guest information, building staff information, and the like. The robot database 138 includes data associated with the robots 102, functions the robots 102 can perform, robot maintenance information, and the like. In some embodiments, the robot database 138 can include routes through the building 110, robot routine information (such as periodic cleaning schedules), diagnostic or communication information associated with the robots, and the like. The building database 136 and the robot database 138 can be accessed by the robot server 130, by the robots 102, or by one or more other components of Fig. 1.

### Robot Overview

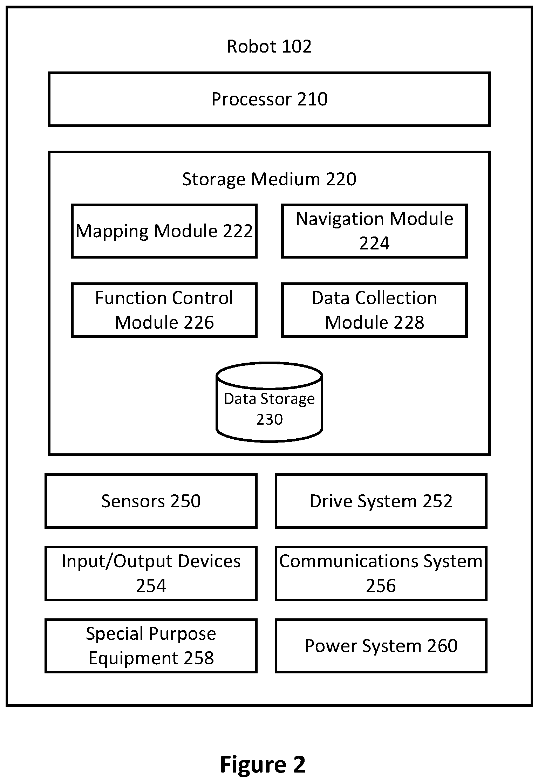

Fig. 2 illustrates an example embodiment of a robot 102. The robot 102 comprises a processor 210, a storage medium 220, sensors 250, a drive system 252, input/output devices 254, a communications system 256, special purpose equipment 258, and a power system 260. In alternative embodiments, the robot 102 may include different, fewer, or additional components.

The sensors 250 comprise devices that measure or detect conditions or properties of the robot, the surrounding environment, or objects and entities within the surrounding environment. The sensors 250 then generate signals to the processor 210, storage medium 220, or other components of the robot 102 representative of the sensed conditions or properties. The sensors 250 may include, for example motion and orientation sensors such as an accelerometer, gyroscope, velocity sensor, or positioning sensor. The sensors 205 may also include object detection sensors, such as a RADAR sensor, LIDAR sensor, and the like. Furthermore, the sensors 250 may include devices such as a light sensor, a noise sensor, a moisture sensor, a thermometer, a dust sensor, a mold sensor, or other sensor for detecting environmental conditions. In yet other embodiments, the sensors 250 may include capture systems such as a still image camera, a video camera, or a microphone. The sensors 250 may include integrated processing devices for processing sensor data before sending it to other components of the robot 102. For example, the sensors 250 may include integrated filters or data conversion processors that may convert the sensor data from its raw captured form to a processed form.

The drive system 252 includes one or more drive components and/or controllers for controlling motion of the robot 102. For example, the drive system 252 may include a set of wheels, one or more drive motors, wheel shafts for providing energy from the drive motors to the wheels, and a drive controller for controlling the drive motors. In an embodiment, the drive system 252 may be configured to enable the robot 102 to navigate in any of multiple different directions regardless of the orientation of the robot. For example, the drive system 252 may include Mecanum wheels or Omni wheels that enable the robot 102 to move in a direction parallel to its axis of orientation, perpendicular to its axis of orientation, or diagonally relative to its axis of orientation. Furthermore, the drive system 252 may enable the robot 102 to rotate in place to a desired orientation.

The input/output device 254 comprise various devices for capturing inputs provided to the robot 102 and generating output information. Input devices may include, for example, buttons, dials, switches, or a touchscreen display for controlling various functions of the robot 102, or may include ports for connecting external input devices such as, for example, a USB port or other serial or parallel input port. The output devices may include, for example, a display, a lighted indicator such as an LED, a haptic device, a speaker, or an output port for connecting to external output devices (e.g., a USB port).

The communications system 256 comprises a wired or wireless communication interface for communicating with external devices (e.g., via the network 104). The communications system 256 may comprise, for example, a Bluetooth interface, a WiFi interface, a cellular communication interface, or other communication interface.

The special purpose equipment 258 comprises components of the robot 102 for performing specific tasks relating to a specialized configuration the robot 102. For example, in a robot 102 designed for vacuuming, the special purpose equipment 258 may comprise a vacuum motor and a vacuum brush. In a robot 102 designed for mopping, the special purpose of equipment 258 may comprise a water tank and a mop head. In other robots 102 (e.g., a robot designed for mapping an area), the special purpose equipment 258 may be omitted.

The power system 260 stores power and supplies power to the robot 102. For example, the power system 260 may comprise a battery or a port for connecting to an external power source (such as a dock station 111). In an embodiment, the power system 260 may include separate power sources for powering high-voltage components such as the drive system 252 and low-voltage components such as integrated electronics.

The storage medium 220 (e.g., a non-transitory computer-readable storage medium) comprises volatile memory, non-volatile storage, or a combination thereof. The storage medium 220 stores instructions that when executed by the processor 210 causes the processor 210 to carry out the functions attributed to the various modules described herein (e.g., a mapping module 222, a navigation module 224, a function control module 226, and a data collection module 228). Additionally, the storage medium 220 may include a data storage 230 to store various data collected by or utilized by the robot 102.

The mapping module 222 includes instructions for automatically mapping an area (e.g., such as a room). For example, the mapping module 222 may control the drive system 252 of the robot 102 to navigate an unexplored space in a particular pattern and process data from the sensors 250 to predict locations of walls, furniture, or other objects or obstacles. The mapping data may be stored to the data storage 230 or may be transmitted to the robot server 130 for storage in the building data 136.

The navigation module 224 includes instructions for controlling navigation of the robot 102. The navigation module 224 may control the robot 102 in an automated manner to complete a certain task assigned to the robot 102 (e.g., mapping a space or cleaning a room) or may navigate in response to manual commands from an operator. In an embodiment, the navigation module 224 may utilize mapping data from the local data storage 230 or the building data 136 to determine an efficient navigation route for completing the assigned task. Furthermore, the navigation module 224 may utilize mapping data and real-time sensing data to navigate in a manner that avoids objects and keepout regions.

The function control module 226 comprises instructions for controlling various functions of the robot 102 to enable the robot 102 to complete an assigned task. In some embodiments, the functions of the robot include operations such as vacuuming, mopping, scrubbing, cleaning, dusting, making a bed, moving a customer's belongings, moving furniture, opening doors, and communicating with a human. For example, for a vacuuming robot 102, the function control module 226 may control the speed of a brush assembly or suction power of a vacuum. For a mopping robot, the function control module 226 may control the spray of water and the spin speed of the mop head. In other embodiments, the function control module 226 may control other special purpose equipment 258 of the robot 102 according to its particular assigned task.

The data collection module 228 comprises instructions for controlling collection and processing of data (e.g., from the sensors 250) obtained by the robot 102. The data collection module 228 may collect and process different types of data depending on a particular data collection task that may be assigned to the robot. For example, the data collection module 228 may collect moisture data to determine areas of a room that are particular damp. In another example, the robot 102 may collect dust data to determine an overall cleanliness factor for a particular room. The data collection module 228 may store the collected data or may share it in real-time with other modules to enable those modules to execute their respective functions, or may provide the collected data to one or more external entities (such as another robot 102, the robot server 130, the remote terminal 134, the robot data store 138, and the like).

### Robot Contextualization of Map Regions

Robots can be broken down into two categories: mobile and non-mobile robots. Within the category of mobile robots, they may be further broken down into localized or non-localized robots; a localized robot knows its absolute position with respect to some reference. This reference for a localized mobile robot is typically in the form of a fixed map representation of an area, such as a two-dimensional occupancy grid, which is a collection of cells that each contain values for whether the cell is occupied by a physical object, unoccupied or unknown.

Simultaneous Localization and Mapping (SLAM) is a robotics technique to generate a representation of a physical space. Multiple sensors are used to take observations of the immediate area around a robot, which are then combined with estimates of the robot's motion to build a representation of the overall space, or more generally a map. However, this transformation of a physical space to a representation thereof will necessarily lose contextual information. This contextual map information may be vital to a robot's functionality.

In practice, map generation is reliant on sensor data (e.g. optical systems such as cameras or lasers). Vision-based systems rely on identifiable features in the area to generate a physical representation of distances. Laser-based systems rely on direct distance measurements of the surrounding environment by reflecting laser light at known angles. These techniques do not currently offer a robot the contextual information required for its functionality that a human would naturally understand.

Many aspects of physical environments might not be understandable or easily representable for robots. There are many situations where contextual knowledge of a space can influence the performance of a task by an actor. For instance, a human told to vacuum a room would understand not to vacuum adjoining spaces in the same room such as a bathroom or a pool, but a robot without this knowledge would not. Likewise, a robot instructed to mop a tile portion of a floor needs to know which areas of the floor are tile and which are covered by an area rug so that it only cleans the correct regions. Providing a robot with relevant contextual information (e.g., within a contextual map) can enable a robot to avoid keepout areas (areas through or into which a robot is unable to safely navigate) identified by the map. This is a simple contextual cue to limit the space in which the robot may visit, but not its internal representation of the physical space.

Other approaches might include physical barriers or signal-based "fences" which require a physical device to provide the robot with the context of a keepout area. For example, a doorway may be outfitted with an infrared emitter or magnet strip that the robot treats as a fence. This approach suffers from a dependency on infrastructure (such as installing physical devices) on every region demarcated as a keepout, which can have substantial repercussions on commercial applications.

In large open spaces, such as warehouses or conference centers, sufficient infrastructure may not exist to support physical devices. Businesses that have a strong emphasis on decor, such as hotels and museums, may not be willing to incorporate the required physical changes in their infrastructure. Some environments may also have misaligned external requirements on their infrastructure, such as cleanliness in hospitals or security in government agencies. An additional concern with fence-based approaches is that they do not contextualize which side of the fence a robot should be on. This becomes especially problematic if a robot finds itself on the wrong side of a fence and is unable to cross back over.

One approach is to have multiple overlapping map representations: localization maps, in which the environment is represented as a two-dimensional occupancy grid that models the physical environment the robot would perceive through its sensors; and additional map overlays used to contextualize regions with information pertaining to the actions a robot may or may not perform in that space ("contextual map layers" as used herein). For instance, a localization map may include boundaries representative of the walls within a room, and an overlaid contextual map layer may identify a floor type (such as tile or carpet), enabling the robot to determine that a vacuuming function should be performed only on the carpeted portion and a mopping function should be performed only on the tiled portion. This provides semantic meaning for the physical environment without the reliance on physical infrastructure.

To create a localization map, a trusted initial set of information is accessed, typically the blueprints/floor plans of the building. The localization map is created from the walls and permanent features of the building. This is the base layer that is used by the robot to understand where it is within the building in the global sense, and to visualize data collected by the robot for humans to consume. The blueprints are combined with alternate sources of data such as images, prior sensor measurements, and human input to create the localization map.

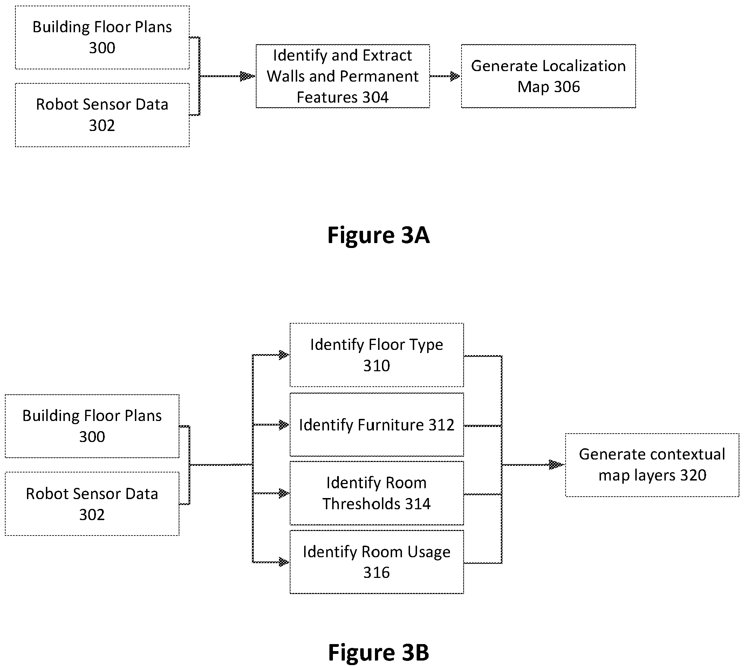

Fig. 3A is a flow chart illustrating the generation of a localization map, according to one embodiment. In the embodiment of Fig. 3A, building floor plans 300 and robot sensor data 302 are accessed. For instance, the building floor plans can be blueprints for a building, and the robot sensor data can be images captured by a robot, LIDAR data captured by the robot, or a SLAM map generated by the robot. From the accessed data, walls and permanent features are identified and extracted 304. The localization map is generated 306 based on the extracted walls and features. It should be noted that in some embodiments, the localization map is generated by a robot (for instance, the same robot or a different robot than the robot that captured the robot sensor data), while in other embodiments, the localization map is generated manually by a human user, or automatically by a computing system associated with the robot, the building, or any other suitable entity.

As with the localization map, the contextual map layers can include an occupancy grid, with each cell of the grid representing information about that location in that layer. For instance, a floor type map layer would identify for each cell of the grid any relevant floor types within the cell (e.g., carpet, tile, hardwood, etc.) A different layer can identify the room type (such as "hallway", "bathroom", "bedroom", etc.). Example contextual map layers types include:
- Obstacle layers (walls, permanent obstacles)
- Flooring type (carpet, tile, marble, hardwood)
- Keep-out regions
- Doors/entryways
- Room type (e.g., kitchen, bathroom, bedroom, office, hallway, etc.)
- Furniture (or regions that have semi-permanent obstacles)
- Historical areas where robots get stuck
- Foot traffic density
- Historically dirty areas
- Historical cleaning history

Fig. 3B is a flow chart illustrating the generation of contextual map layers, according to one embodiment. Building floor plans 300 and robot sensor data 302 is accessed. From the accessed data, one or more properties or characteristics of an area are identified for use in generating contextual map layers. In the embodiment of Fig. 3B, a floor type for each of one or more regions within an area can be identified 310 (for instance, using a floor sensor), furniture within one or more regions of the area is identified 312, room thresholds are identified 314, and room usage is identified 316. It should be noted in that other embodiments, other properties or characteristics of the room can be identified (including but not limited to those listed above). One or more contextual map layers are generated 320 based on the identified properties or characteristics of the area. For instance, a first "floor type" map layer, a second "furniture" map layer, a third "room threshold" map layer, and a fourth "room usage" map layer can be generated. As with the localization map, it should be noted that one or more contextual map layers can be generated by one or more robots (e.g., different robots can generate different contextual map layers), and one or more contextual map layers can be generated by a robot server or building server, manually by a human user, or by any other suitable computing system. It should be noted that the map layers can be stored as grid layers, as raster graphics images, as vector graphics images, or as any other suitable format.

The localization map and the one or more contextual map layers can be combined to form a combined map. As a robot traverses an area using the combined map, the robot can update or modify the combined map based on image or sensor data captured by the robot. For instance, the robot can traverse a hotel room using a combined map that includes a contextual map layer identifying the location of furniture within the room. In an example where a hotel guest has moved a chair within the room to a different location, the robot can detect the new position and orientation of the chair, and can modify the combined map to reflect the chair's new position. Alternatively, the robot can move the chair back to the location and orientation initially identified by the combined map, or can flag the chair for manual relocation by a human.

A robot can use a combined map to navigate or to perform one or more functions within an area. For instance, the combined map can include a contextual map layer that identifies regions of the map within which point-to-point travel by the robot is permissible, and the robot can navigate through the room based on these regions. Likewise, the combined map can include a keepout layer defining areas the robot cannot or should not enter, and the robot can navigate through the room by avoiding these areas. In some embodiments, the combined map can include a floor type layer, and the robot can perform one or more cleaning functions (e.g., vacuuming, mopping, etc.) based on the identified floor types. In other embodiments, the combined map can include layers identifying areas in which spot cleaning or edge cleaning is required, identifying areas in which particular (such as a vacuum suction power or brush roller RPM) should be used, and the like. In some embodiments, the combined map can define, for each of one or more portions of the map, one or more functions that a robot can perform within the portion of the map, one or more functions that a robot must perform within the portion of the map, and/or one or more functions that a robot is prohibited from performing within the portion of the map.

For example, a robot can be instructed to vacuum a room. A floor type map layer and a can be used to identify two regions within the room that are carpeted. The robot identifies a path that enables vacuuming of the regions that are carpeted. The two carpeted regions can be separated by a hardwood floor on which vacuuming is prohibited. Accordingly, as the robot traverses the hardware floor, the robot can disable the vacuuming functionality. In addition, a keepout map layer can identify a region within the room that includes a table and chairs, and the robot can select a shortest path within the room that enables the robot to vacuum the carpeted regions of the room while avoiding the table and chairs. Finally, a map layer can identify heavily trafficked portions of the carpeted regions, and he robot plan a route that vacuums each of these heavily trafficked portions more than once.

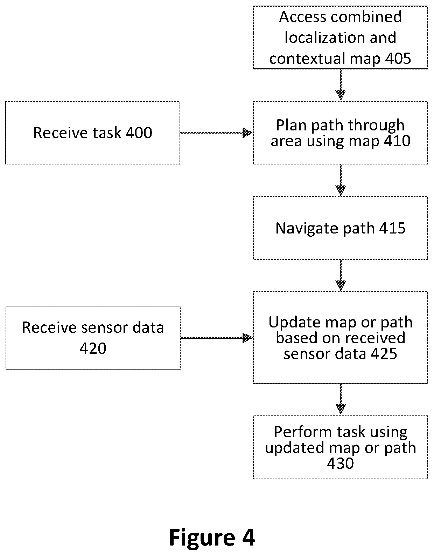

Fig. 4 is a flow chart illustrating a process for a robot to perform a task and update a contextual map, according to one embodiment. A task is received 400 by a robot. The task can be provided by a human, or can be assigned to the robot as part of an automated building-wide directive (e.g., a directive to vacuum all rooms on a floor of the building). A combined localization and contextual map is accessed 405, for instance from the robot itself, from a building server or computing system, from a mobile device of a human user, or from another robot. The robot then plans 410 a path through an area using the accessed map, for instance based on the received task. For example, if the task is to clean a room, the robot can plan a path from its current location to the room, and can plan a path within the room that will allow it to clean the room.

The robot navigates 415 the path, and receives 420 sensor data while navigating the path. For instance, the robot can include a LIDAR sensor and camera that allows it to identify the location of obstacles, people, furniture, and the like within the path. In the event that the robot identifies something that will prevent it from navigating the path or performing the task (such as a previously undetected piece of furniture at a location on the path), the robot can update 425 the accessed map or the planned path based on the detected obstacle, and can perform the task using the updated map or path. For example, the robot can navigate to a room in which the task is to be performed using an alternative route, or can perform the task at a different starting location within the room based on the updated map. The updated map can then be provided by the robot to a building server, computing system, or another robot for subsequent use.

As noted above, one example contextual map layer is a keepout map. The keepout map defines portions of an area through which a robot should not or cannot enter or travel. Each of these portions is referred to as a "keepout region". For instance, within the context of a hotel room, a keepout region may be defined for a bed within the hotel room (e.g., the portion of the localization map corresponding to the boundary of the bed can be designated as a keepout region, since the robot is unable to enter or travel through the boundary). Likewise, a keepout region can be defined for high-trafficked areas where a robot may inhibit movement of people within the areas. A keepout region can be manually defined, for instance by an owner of a building, a manager of a company, a cleaning or maintenance staff member, a user of the robot, or any other individual. Keepout regions can also correspond to regions where the presence of a robot may risk damaging the floor or objects within an area. Likewise, keepout regions can be defined for areas inaccessible to humans, for areas where the robot may get stuck, areas without wireless reception, walls, building structures, access gates, permanent fixtures, or any other suitable area.

In some embodiments, a contextual map layer can include keepout regions, can include free space regions (where full speed movement is permitted), and can further include reduced speed regions (where movement is permitted but only at a reduced speed). In such embodiments, the reduced speed regions can be defined based on high trafficked areas, based on areas where full speed movement may risk damaging furniture or other objects within the areas, based on particular floor types, based on a presence of a person or type of object, or the like. Likewise, in some embodiments, a contextual map layer can include reduced functionality regions (where the robot can only perform certain operations but not others). For example, a contextual map layer can identify a first set of regions where the robot can perform all operations, and can identify a second set of regions where the robot is not allowed to vacuum. It should be noted that a contextual map can identify reduced functionality regions by either identifying allowed operations within the regions or by identifying operations that aren't allowed within the regions.

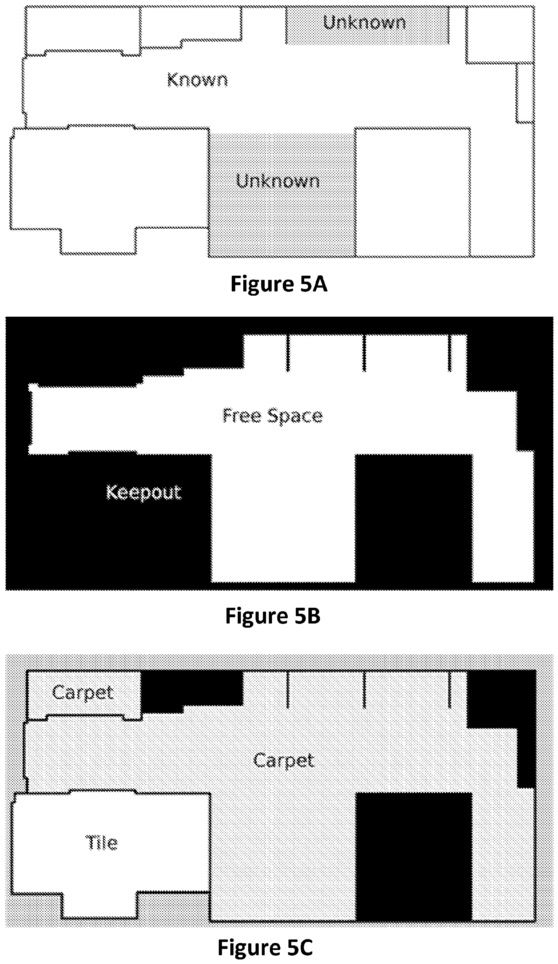

Figs. 5A-5F illustrate examples of contextualized maps, according to various embodiments. In the example of Fig. 5A, a map includes areas designated as "known" and "unknown". In this example, the designation between "known" and "unknown" can be part of a contextual map layer overlaid on a localization map, and can reflect a status of room data based on previously-acquired robot data. For instance, areas designated as "known" can be areas previously determined by a robot to not include obstacles, and areas designated as "unknown" can be areas previously determined by a robot to either include obstacles or areas for which the presence of obstacles is unknown. A robot can use the map of Fig. 5A, for instance by traveling within the "known" areas and scanning the unknown areas to detect the presence of obstacles. In the event that the robot either detects obstacles within the unknown areas, or determines that the unknown areas do not include obstacles, the robot can update the map and provide the updated map to another robot or a computing system associated with the area, or can provide information describing the presence or absence of obstacles within the unknown area to a computing system or server configured to update the map based on the provided information.

In the example of Fig. 5B, a map includes a keepout contextual layer. In this example, the white region (labeled "free space") represents areas that a robot can enter or travel within. Likewise, the black region (labeled "keepout") represents areas that a robot cannot, should not, or is not permitted to enter. As the robot traverses within the area using the map of Fig. 5B, the robot can determine that portions of the area designated as keepout regions are in fact obstacle-free, and can update the map or can inform a remote computing system (such as a building server) that the portions should be re-classified as "free space" regions. Likewise, the robot, traversing through the room, can identify an obstacle not otherwise indicated by the map of Fig. 5B, and can update the map or can provide information describing the location and/or boundary of the object to a remote system in order to update the map of Fig. 5B.

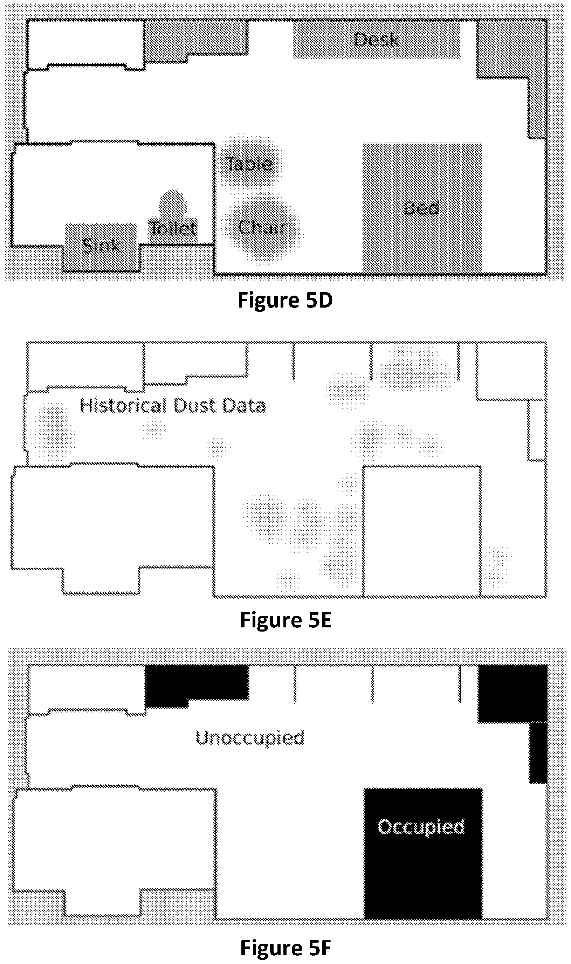

In the example of Fig. 5C, a map includes a floor type contextual map layer. For instance, the white area represents tile floor, the grey area represents carpeted floor, and the black area represents keepout regions. A robot can use the map of Fig. 5C to identify cleaning operations to perform within each area of the room (e.g., a mopping operation on the tile floor and a vacuuming operation on the carpeted floor). In the example of Fig. 5D, a map includes an obstacle contextual layer identifying obstacles within the room, for instance, a bed, a desk, a table, a chair, a toilet, and as ink. A robot can use the map of Fig. 5D to identify a route to take through the room, for instance by avoiding the obstacles or by identify boundaries of the obstacles to aid in cleaning. In the example of Fig. 5E, a map includes a historical dust data contextual map layer identifying regions of the room that have accumulated dust in the past. A robot can use the map of Fig. 5E to identify portions of the room that require additional vacuuming (e.g., another vacuuming pass, a higher vacuuming power, a slower vacuuming speed, etc.) In the example of Fig. 5F, a map includes a human occupation contextual map layer identifying portions of the room occupied by humans. A robot can use the map of Fig. 5F to plan a route through the room that avoids or doesn't obstruct) human occupants of the room.

As data is gathered by the robot via sensors within the robot, the contextual map layers can be continuously updated to maintain accuracy. Walls, permanent furniture, or other obstacles that may not be properly positioned on the localization map are updated from high-accuracy sensors like a LIDAR sensor. The robot can then update the contextual map layers to include the proper position of the detected objects or obstacles, or can provide information describing the location of the objects or obstacles to a remote system (such as a building server) to update the map layers. The updated contextual map layers can be distributed to one or more other robots (such as a set of robots within a threshold distance of the robot, on a same floor or in a same building as the robot, or assigned a particular task or navigating a particular route affect by the updated map), for instance in real-time, in order to provide the other robots with the most up-to-date contextual maps available.

In one embodiment, the robot (or a computing system to which the robot communicates sensor information) can update a contextual map layer in response to detecting an obstacle within a free space region. In such an embodiment, the contextual map layer is updated by adding a keepout region to the contextual map layer corresponding to the boundary or location of the detected obstacle. Further, the robot can notify maintenance or security personnel of the detected obstacle. Likewise, the robot (or the computing system) can update a contextual map layer by removing a keepout region in response to determining that the obstacle corresponding to the keepout region is no longer there (for instance, in response to being moved). It should be noted that although reference is made to "contextual map layers", in practice, a contextual map layer may itself be a map, or may be combined with a localization layer to form a map.

## Claims

1. A mobile robot (102) comprising:
an input configured to access map data (300) corresponding to an area in which the mobile robot (102) is located;
a map making engine configured to generate a map including:
(a) an initial keepout map layer (320) corresponding to the accessed map data, the initial keepout map layer representing at least one free space region that the mobile robot is permitted to enter and at least one keepout region that the mobile robot is not permitted to enter; and
(b) an initial historical dust data map layer representing high dust regions of the area that have previously accumulated dust requiring higher levels of vacuuming than low dust regions;
a navigation engine configured to navigate the mobile robot (102) during the performance of one or more tasks within the area such that the mobile robot (102) does not enter a region identified as a keepout region within the initial keepout map layer (320) and the mobile robot applies additional vacuuming to the high dust regions identified in the initial historical dust data map layer;
one or more sensors (250) configured to produce sensor data indicating locations of detected objects in the area, locations of one or more regions within the area through which the mobile robot (102) is unable to navigate, and updated locations of high dust regions; and
a map modification engine configured to generate an updated keepout map layer based on the initial keepout map and the sensor data produced by the one or more sensors (250) and to generate an updated historical dust data map layer based on the initial historical dust data map layer and the sensor data.

2. The mobile robot (102) of claim 1, wherein the map data (300) comprises blue prints for a building in which the mobile robot is located or a SLAM map previously generated by the mobile robot (102) or by an/other mobile robot.

3. The mobile robot (102) of claim 1, wherein the map data (300) is received from a robot server (130) to which the mobile robot (102) is communicatively coupled.

4. The mobile robot (102) of claim 1, wherein the initial keepout map layer (320) includes a representation of one or more keepout regions within the area, in particular being designated based on one or more of a wall, building structure, furniture, access gates, and a permanent fixture,
each keepout region comprising a portion of the area through which the mobile robot (102) will not travel.

5. The mobile robot (102) of claim 1, wherein the mobile robot (102) is configured to perform one or more tasks based on the updated keepout map layer, or to perform tasks comprising one or more of: vacuuming, mopping, scrubbing, cleaning, dusting, making a bed, moving a customer's belongings, moving furniture, opening doors, and communicating with a human.

6. The mobile robot (102) of claim 1, wherein the navigation engine is configured to navigate the mobile robot (102) by identifying an initial location of the mobile robot, identifying an end location of the mobile robot (102), and selecting a path through the area from the initial location to the end location that substantially minimizes the distance traveled by the mobile robot without entering a keepout region represented by the initial keepout map layer (320).

7. The mobile robot (102) of claim 1, wherein at least one sensor (205) comprises:
- a LIDAR system configured to detect objects within a vicinity of the mobile robot (102), and wherein generating an updated keepout map layer comprises including an object detected by the LIDAR system within the initial keepout map layer (320), or
- a floor sensor configured to detect a type of the floor under the mobile robot (102), and wherein generating an updated keepout map layer comprises including a detected floor type within the initial keepout map layer (320), or
- a camera configured to take images of objects or entities within a vicinity of the mobile robot (102), and wherein generating an updated keepout map layer comprises including an object, obstacle, or entity captured within an image taken by the camera within the initial keepout map layer (320).

8. The mobile robot (102) of claim 1, wherein generating an updated keepout map layer comprises removing a keepout region represented by the initial keepout map layer based on a determination that the portion of the area corresponding to the keepout region is safe for the mobile robot to traverse.

9. The mobile robot (102) of claim 1, wherein the mobile robot (102) is configured to provide the updated keepout map layer to one or both of another mobile robot and a robot server (130).

10. A method comprising:
accessing, by a mobile robot (102), map data (300) corresponding to an area in which the mobile robot (102) is located, the map data (300) comprising:
(a) an initial keepout map layer (320) representing at least one free space region that the mobile robot is permitted to enter and at least one keepout region that the mobile robot is not permitted to enter; and
(b) an initial historical dust data map layer representing high dust regions of the area that have previously accumulated dust requiring higher levels of vacuuming than low dust regions;
performing, by the mobile robot (102), one or more tasks within the area, wherein the mobile robot navigates to avoid entering the at least one keepout region and the mobile robot navigates to apply additional vacuuming to the high dust regions identified in the initial historical dust data map layer;
during the performance of the one or more tasks, detecting, by one or more sensors (250) of the mobile robot (102), one or more regions within the area through which the mobile robot (102) is unable to navigate and detecting previously unidentified high dust regions; and
updating, by the mobile robot (102), the initial keepout map layer (320) to include the detected one or more regions; and
updating, by the mobile robot, the initial historical dust data map layer to include the previously unidentified high dust regions.

11. The method of claim 10, wherein the keepout map layer (320) is provided to one or both of another mobile robot (102) and a computing system associated with the mobile robot or a building or location corresponding to the area in which the mobile robot is located.

12. The method of claim 10, wherein the one or more sensors comprises a floor sensor configured to detect a type of the floor under the mobile robot, and wherein updating the initial keepout map layer comprises adding an indication of a detected floor type.

13. The method of claim 10, wherein performing the one or more tasks comprises:
navigating the mobile robot (102) by identifying an initial location of the mobile robot (102), identifying an end location of the mobile robot, and selecting a path through the area from the initial location to the end location that substantially minimizes a distance traveled by the mobile robot without entering a keepout region represented by the initial keepout map layer.

14. A non-transitory computer-readable storage medium storing instructions executable by a processor, the instructions when executed causing the processor to perform steps comprising:
accessing, by a mobile robot (120), map data (300) corresponding to an area in which the mobile robot (120) is located, the map data (300) comprising:
a) an initial keepout map layer representing at least one free space region that the mobile robot is permitted to enter and at least one keepout region that the mobile robot is not permitted to enter; and
(b) an initial historical dust data map layer representing high dust regions of the area that have previously accumulated dust requiring higher levels of vacuuming than low dust regions;
performing, by the mobile robot, one or more tasks within the area, wherein the mobile robot navigates to avoid entering the at least one keepout region and the mobile robot navigates to apply additional vacuuming to the high dust regions identified in the initial historical dust data map layer;
during the performance of the one or more tasks, detecting, by one or more sensors of the mobile robot, one or more regions within the area through which the mobile robot is unable to navigate and detecting previously unidentified high dust regions;
updating, by the mobile robot, the initial keepout map layer to include the one or more regions; and
updating, by the mobile robot, the initial historical dust data map layer to include the previously unidentified high dust regions.

15. The non-transitory computer-readable storage medium of claim 14, wherein the one or more sensors comprises a floor sensor configured to detect a type of the floor under the mobile robot, and wherein updating the initial keepout may layer comprises adding an indication of a detected floor type.

## Patentansprüche

1. Mobiler Roboter (102), umfassend:
eine Eingabe, die konfiguriert ist, um auf Kartendaten (300) zuzugreifen, die einem Gebiet entsprechen, in dem sich der mobile Roboter (102) befindet;
eine Kartenerstellungsengine, die konfiguriert ist, um eine Karte zu erzeugen, die einschließt:
(a) eine anfängliche Sperrkartenschicht (320), die den zugänglichen Kartendaten entspricht, wobei die anfängliche Sperrkartenschicht mindestens einen Freiraumbereich, den der mobile Roboter betreten darf, und mindestens einen Sperrbereich, den der mobile Roboter nicht betreten darf, darstellt; und
(b) eine anfängliche Staubdaten-Kartenschicht, die Bereiche mit hohem Staubanteil in der Zone darstellt, in denen sich zuvor Staub angesammelt hat, und die stärker abgesaugt werden müssen als Bereiche mit geringem Staubanteil;
eine Navigationsengine, die konfiguriert ist, um den mobilen Roboter (102) während der Durchführung einer oder mehrerer Aufgaben innerhalb des Gebiets derart zu navigieren, dass der mobile Roboter (102) nicht in einen Bereich eindringt, der als ein Sperrbereich innerhalb der anfänglichen Sperrkartenschicht (320) identifiziert ist, und der mobile Roboter zusätzliche Saugkraft auf die in der anfänglichen Staubdatenkarte identifizierten Bereichen mit hohem Staubanteil anwendet;
einen oder mehrere Sensoren (250), die konfiguriert sind, um Sensordaten zu erzeugen, die Standorte von erkannten Objekten in dem Gebiet, Standorte von einem oder mehreren Bereichen innerhalb des Gebiets, durch das der mobile Roboter (102) nicht navigieren kann, und aktualisierte Standorte von Bereichen mit hohem Staubanteil anzeigen; und
eine Kartenmodifikationsengine, die konfiguriert ist, um basierend auf der anfänglichen Sperrkarte und der durch den einen oder die mehreren Sensoren (250) erzeugten Sensordaten eine aktualisierte Sperrkartenschicht erzeugt und basierend auf der anfänglichen Staubdaten-Kartenschicht und der Sensordaten eine aktualisierte Staubdaten-Kartenschicht erzeugt.

2. Mobiler Roboter (102) nach Anspruch 1, wobei die Kartendaten (300) Blaupausen für ein Gebäude, in dem sich der mobile Roboter befindet, oder eine SLAM-Karte umfassen, die zuvor durch den mobilen Roboter (102) oder durch einen anderen mobilen Roboter erstellt wurde.

3. Mobiler Roboter (102) nach Anspruch 1, wobei die Kartendaten (300) von einem Roboterserver (130) empfangen werden, an den der mobile Roboter (102) kommunikativ gekoppelt ist.

4. Mobiler Roboter (102) nach Anspruch 1, wobei die anfängliche Sperrkartenschicht (320) eine Darstellung eines oder mehrerer Sperrbereiche innerhalb des Gebiets einschließt, die insbesondere basierend auf einer oder mehreren Wänden, Gebäudestrukturen, Möbelstücken, Zugangstüren und dauerhaften Einbauten gekennzeichnet ist,
jeder Sperrbereich umfassend einen Abschnitt des Gebiets, durch das sich der mobile Roboter (102) nicht bewegt.

5. Mobiler Roboter (102) nach Anspruch 1, wobei der mobile Roboter (102) konfiguriert ist, um eine oder mehrere Aufgaben basierend auf der aktualisierten Sperrkartenschicht auszuführen oder Aufgaben auszuführen, umfassend eines oder mehrere von: Staubsaugen, Wischen, Schrubben, Reinigen, Staubwischen, Betten machen, Bewegen von Eigentum eines Kunden, Bewegen von Möbeln, Öffnen von Türen und Kommunizieren mit einem Menschen.

6. Mobiler Roboter (102) nach Anspruch 1, wobei die Navigationsengine so konfiguriert ist, um den mobilen Roboter (102) zu navigieren, indem sie eine anfängliche Position des mobilen Roboters identifiziert, eine Endposition des mobilen Roboters (102) identifiziert und einen Pfad durch die Zone von der anfänglichen Position zur Endposition auswählt, der die von dem mobilen Roboter zurückgelegte Strecke im Wesentlichen minimiert, ohne in einen Sperrbereich einzudringen, der durch die anfängliche Sperrkartenschicht (320) dargestellt wird.

7. Mobiler Roboter (102) nach Anspruch 1, wobei mindestens ein Sensor (205) umfasst:
- ein LIDAR-System, das konfiguriert ist, um Objekte innerhalb einer Nähe des mobilen Roboters (102) zu erkennen, und wobei das Erzeugen einer aktualisierten Sperrkartenschicht das Einschließen eines Objekts umfasst, das durch das LIDAR-System innerhalb der anfänglichen Sperrkartenschicht (320) erfasst wird; oder
- einen Bodensensor, der konfiguriert ist, um einen Typ des Bodens unter dem mobilen Roboter (102) zu erfassen, und wobei das Erzeugen einer aktualisierten Sperrkartenschicht das Einschließen eines erkannten Bodentyps innerhalb der anfänglichen Sperrkartenschicht (320) umfasst; oder
- eine Kamera, die konfiguriert ist, um Bilder von Objekten oder Einheiten in der Nähe des mobilen Roboters (102) aufzunehmen, und wobei das Erzeugen einer aktualisierten Sperrkartenschicht das Einschließen eines Objekts, eines Hindernisses oder einer Einheit, das/die in einem durch die Kamera aufgenommenen Bild erfasst wurde, in die anfängliche Sperrkartenschicht (320) umfasst.

8. Mobiler Roboter (102) nach Anspruch 1, wobei das Erzeugen einer aktualisierten Sperrkartenschicht das Entfernen eines Sperrbereichs umfasst, der durch die anfängliche Sperrkartenschicht dargestellt wird, basierend auf einer Feststellung, dass der Teil des Gebiets, der dem Sperrbereich entspricht, für den mobilen Roboter sicher zu durchqueren ist.

9. Mobiler Roboter (102) nach Anspruch 1, wobei der mobile Roboter (102) konfiguriert ist, um die aktualisierte Sperrkartenschicht einem anderen mobilen Roboter oder einem Roboterserver (130) oder beiden zur Verfügung zu stellen.

10. Verfahren, umfassend:
Zugreifen, durch einen mobilen Roboter (102), auf Kartendaten (300), die einem Gebiet entsprechen, in dem sich der mobile Roboter (102) befindet, die Kartendaten (300) umfassend:
(a) eine anfängliche Sperrkartenschicht (320), die mindestens einen Freiraumbereich, den der mobile Roboter betreten darf, und mindestens einen Sperrbereich, den der mobile Roboter nicht betreten darf, darstellt; und
(b) eine anfängliche Kartenschicht mit gesammelten Staubdaten, die Bereiche mit hohem Staubanteil in der Zone darstellt, in denen sich zuvor Staub angesammelt hat, und die stärker abgesaugt werden müssen als Bereiche mit geringem Staubanteil;
Durchführen einer oder mehrerer Aufgaben in dem Gebiet durch den mobilen Roboter (102), wobei der mobile Roboter navigiert, um nicht in den mindestens einen Sperrbereich einzudringen, und der mobile Roboter navigiert, um die in der anfänglichen historischen Staubdaten-Kartenschicht identifizierten Bereiche mit hohem Staubanteil zusätzlich abzusaugen;
Erkennen während der Durchführung der einen oder mehreren Aufgaben eines oder mehrerer Bereiche innerhalb des Gebiets, durch das der mobile Roboter (102) nicht navigieren darf, durch einen oder mehrere Sensoren (250) des mobilen Roboters (102), und Erkennen zuvor nicht identifizierte Bereiche mit hohem Staubanteil; und
Aktualisieren der anfänglichen Sperrkartenschicht (320) durch den mobilen Roboter (102), um den einen oder die mehreren erkannten Bereiche einzuschließen; und
Aktualisieren der anfänglichen Staubdaten-Kartenschicht durch den mobilen Roboter, um die zuvor nicht identifizierten Bereiche mit hohem Staubanteil einzuschließen.

11. Verfahren nach Anspruch 10, wobei die Sperrkartenschicht (320) einem anderen mobilen Roboter (102) oder einem Computersystem, das mit dem mobilen Roboter oder einem Gebäude oder einem Ort, der dem Gebiet entspricht, in dem sich der mobile Roboter befindet, verbunden ist oder beiden zur Verfügung gestellt wird.

12. Verfahren nach Anspruch 10, wobei der eine oder die mehreren Sensoren einen Bodensensor umfassen, der konfiguriert ist, um die Art des Bodens unter dem mobilen Roboter zu erkennen, und wobei das Aktualisieren der anfänglichen Sperrkartenschicht das Hinzufügen einer Anzeige einer erkannten Bodenart umfasst.

13. Verfahren nach Anspruch 10, wobei das Durchführen der einen oder der mehreren Aufgaben umfasst:
Navigieren des mobilen Roboters (102), indem eine anfängliche Position des mobilen Roboters (102) identifiziert wird, eine Endposition des mobilen Roboters identifiziert wird und ein Pfad durch das Gebiet von der anfänglichen Position zur Endposition ausgewählt wird, der eine von dem mobilen Roboter zurückgelegte Strecke im Wesentlichen minimiert, ohne in einen Sperrbereich einzudringen, der durch die anfängliche Sperrkartenschicht dargestellt wird.

14. Nicht-flüchtiges computerlesbares Speichermedium, das Befehle speichert, die durch einen Prozessor ausgeführt werden können, wobei die Befehle, wenn sie ausgeführt werden, den Prozessor veranlassen, Schritte durchzuführen, umfassend:
Zugreifen, durch einen mobilen Roboter (120), auf Kartendaten (300), die einem Gebiet entsprechen, in dem sich der mobile Roboter (120) befindet, die Kartendaten (300) umfassend:
a) eine anfängliche Sperrkartenschicht, die mindestens einen Freiraumbereich, den der mobile Roboter betreten darf, und mindestens einen Sperrbereich, den der mobile Roboter nicht betreten darf, darstellt; und
(b) eine anfängliche Staubdaten-Kartenschicht, die Bereiche mit hohem Staubanteil in dem Gebiet darstellen, in denen sich zuvor Staub angesammelt hat, und die stärker abgesaugt werden müssen als Bereiche mit geringem Staubanteil;
Durchführen einer oder mehrerer Aufgaben in dem Gebiet durch den mobilen Roboter, wobei der mobile Roboter navigiert, um nicht in den mindestens einen Sperrbereich einzudringen, und der mobile Roboter navigiert, um die in der anfänglichen historischen Staubdaten-Kartenschicht identifizierten Bereiche mit hohem Staubanteil zusätzlich abzusaugen;
Erkennen während der Durchführung der einen oder mehreren Aufgaben eines oder mehrerer Bereiche innerhalb des Gebiets, durch das der mobile Roboter nicht navigieren darf, durch einen oder mehrere Sensoren des mobilen Roboters, und Erkennen zuvor nicht identifizierte Bereiche mit hohem Staubanteil;
Aktualisieren der anfänglichen Sperrkartenschicht durch den mobilen Roboter, um den einen oder die mehreren Bereiche einzuschließen;
Aktualisieren der anfänglichen Staubdaten-Kartenschicht durch den mobilen Roboter, um die zuvor nicht identifizierten Bereiche mit hohem Staubanteil einzuschließen.

15. Nicht-flüchtiges computerlesbares Speichermedium nach Anspruch 14, wobei der eine oder die mehreren Sensoren einen Bodensensor umfassen, der konfiguriert ist, um die Art des Bodens unter dem mobilen Roboter zu erkennen, und wobei das Aktualisieren der anfänglichen Sperrkartenschicht das Hinzufügen einer Anzeige einer erkannten Bodenart umfasst.

## Revendications

1. Robot mobile (102) comprenant :
une entrée configurée pour accéder à des données cartographiques (300) correspondant à une zone dans laquelle se trouve le robot mobile (102) ;
un moteur de création de cartes configuré pour générer une carte comprenant :
(a) une couche cartographique initiale d'exclusion (320) correspondant aux données cartographiques consultées, la couche cartographique initiale d'exclusion représentant au moins une région d'espace libre dans laquelle le robot mobile est autorisé à pénétrer et au moins une région d'exclusion dans laquelle le robot mobile n'est pas autorisé à pénétrer ; et
(b) une couche cartographique initiale de données historiques sur la poussière représentant les régions de la zone à fort taux de poussière qui ont précédemment accumulé de la poussière nécessitant des niveaux d'aspiration plus élevés que les régions à faible taux de poussière ;
un moteur de navigation configuré pour faire naviguer le robot mobile (102) pendant l'exécution d'une ou plusieurs tâches dans la zone de sorte que le robot mobile (102) n'entre pas dans une région identifiée comme une région d'exclusion dans la couche cartographique initiale d'exclusion (320) et que le robot mobile applique une aspiration supplémentaire aux régions à fort taux de poussière identifiées dans la couche cartographique initiale de données historiques sur la poussière ;
un ou plusieurs capteurs (250) configurés pour produire des données de capteurs indiquant les emplacements des objets détectés dans la zone, les emplacements d'une ou plusieurs régions dans la zone à travers lesquelles le robot mobile (102) ne peut pas naviguer, et les emplacements mis à jour des régions à fort taux de poussière ; et
un moteur de modification des cartes configuré pour générer une couche cartographique d'exclusion mise à jour sur la base de la carte initiale d'exclusion et des données de capteurs produites par le un ou plusieurs capteurs (250) et pour générer une couche cartographique mise à jour des données historiques sur la poussière sur la base de la couche cartographique initiale des données historiques sur la poussière et des données de capteurs.

2. Robot mobile (102) selon la revendication 1, dans lequel les données cartographiques (300) comprennent des plans d'un bâtiment dans lequel se trouve le robot mobile ou une carte SLAM précédemment générée par le robot mobile (102) ou par un autre robot mobile.

3. Robot mobile (102) selon la revendication 1, dans lequel les données cartographiques (300) sont reçues d'un serveur de robot (130) auquel le robot mobile (102) est couplé de manière communicative.

4. Robot mobile (102) selon la revendication 1, dans lequel la couche cartographique initiale d'exclusion (320) comprend une représentation d'une ou plusieurs régions d'exclusion dans la zone, en particulier désignée sur la base d'un ou de plusieurs murs, d'une structure de bâtiment, de meubles, de portes d'accès et d'une installation permanente,
chaque région d'exclusion comprenant une partie de la zone dans laquelle le robot mobile (102) ne se déplacera pas.

5. Robot mobile (102) selon la revendication 1, dans lequel le robot mobile (102) est configuré pour effectuer une ou plusieurs tâches sur la base de la couche cartographique d'exclusion mise à jour, ou pour effectuer des tâches comprenant une ou plusieurs des opérations suivantes : aspirer, laver, frotter, nettoyer, dépoussiérer, faire un lit, déplacer les affaires d'un client, déplacer des meubles, ouvrir des portes et communiquer avec un être humain.

6. Robot mobile (102) selon la revendication 1, dans lequel le moteur de navigation est configuré pour faire naviguer le robot mobile (102) en identifiant un emplacement initial du robot mobile, en identifiant un emplacement final du robot mobile (102), et en sélectionnant une trajectoire à travers la zone de l'emplacement initial à l'emplacement final qui réduise sensiblement la distance parcourue par le robot mobile sans entrer dans une région d'exclusion représentée par la couche cartographique initiale d'exclusion (320).

7. Robot mobile (102) selon la revendication 1, dans lequel au moins un capteur (205) comprend :
- un système LIDAR configuré pour détecter des objets à proximité du robot mobile (102), et dans lequel la génération d'une couche cartographique d'exclusion mise à jour comprend l'inclusion d'un objet détecté par le système LIDAR dans la couche cartographique initiale d'exclusion (320), ou
- un capteur de sol configuré pour détecter un type de sol sous le robot mobile (102), et dans lequel la génération d'une couche cartographique d'exclusion mise à jour comprend l'inclusion d'un type de sol détecté dans la couche cartographique initiale d'exclusion (320), ou
- une caméra configurée pour prendre des images d'objets ou d'entités à proximité du robot mobile (102), et dans lequel la génération d'une couche cartographique d'exclusion mise à jour comprend l'inclusion d'un objet, d'un obstacle ou d'une entité capturé dans une image prise par la caméra dans la couche cartographique initiale d'exclusion (320).

8. Robot mobile (102) selon la revendication 1, dans lequel la génération d'une couche cartographique d'exclusion mise à jour comprend la suppression d'une région d'exclusion représentée par la couche cartographique initiale d'exclusion sur la base d'une détermination que la partie de la zone correspondant à la région d'exclusion est sûre pour la traversée du robot mobile.

9. Robot mobile (102) selon la revendication 1, dans lequel le robot mobile (102) est configuré pour fournir la couche cartographique d'exclusion mise à jour à un autre robot mobile et à un serveur de robot (130), ou aux deux.

10. Procédé comprenant :
l'accès, par un robot mobile (102), à des données cartographiques (300) correspondant à une zone dans laquelle se trouve le robot mobile (102), les données cartographiques (300) comprenant :
(a) une couche cartographique initiale d'exclusion (320) représentant au moins une région d'espace libre dans laquelle le robot mobile est autorisé à pénétrer et au moins une région d'exclusion dans laquelle le robot mobile n'est pas autorisé à pénétrer ; et
(b) une couche cartographique initiale de données historiques sur la poussière représentant les régions de la zone à fort taux de poussière qui ont précédemment accumulé de la poussière nécessitant des niveaux d'aspiration plus élevés que les régions à faible taux de poussière ;
l'exécution, par le robot mobile (102), d'une ou plusieurs tâches dans la zone, dans laquelle le robot mobile navigue pour éviter d'entrer dans l'au moins une région d'exclusion, et le robot mobile navigue pour appliquer une aspiration supplémentaire aux régions à fort taux de poussiéreuse identifiées dans la couche cartographique initiale des données historiques sur la poussière ;
pendant l'exécution de la une ou de plusieurs tâches, la détection, par un ou plusieurs capteurs (250) du robot mobile (102), d'une ou de plusieurs régions de la zone dans laquelle le robot mobile (102) est incapable de naviguer, et la détection de régions à fort taux de poussière non identifiées précédemment ; et
la mise à jour, par le robot mobile (102), de la couche cartographique initiale d'exclusion (320) afin d'inclure une ou plusieurs régions détectées ; et
la mise à jour, par le robot mobile, de la couche cartographique initiale de données historiques sur la poussière afin d'y inclure les régions à fort taux de poussière non identifiées précédemment.

11. Procédé selon la revendication 10, dans laquelle la couche cartographique d'exclusion (320) est fournie à un autre robot mobile (102) ou aux deux, et à un système informatique associé au robot mobile ou à un bâtiment ou à un emplacement correspondant à la zone dans laquelle se trouve le robot mobile.

12. Procédé selon la revendication 10, dans lequel le un ou plusieurs capteurs comprennent un capteur de sol configuré pour détecter un type de sol sous le robot mobile, et dans lequel la mise à jour de la couche cartographique initiale d'exclusion comprend l'ajout d'une indication d'un type de sol détecté.

13. Procédé selon la revendication 10, dans lequel l'exécution de la une ou plusieurs tâches comprend :
la navigation du robot mobile (102) par l'identification d'un emplacement initial du robot mobile (102), l'identification d'un emplacement final du robot mobile, et la sélection d'une trajectoire à travers la zone de l'emplacement initial à l'emplacement final qui réduise sensiblement une distance parcourue par le robot mobile sans entrer dans une région d'exclusion représentée par la couche cartographique initiale d'exclusion.

14. Support de stockage non transitoire lisible par ordinateur pour stocker des instructions exécutables par un processeur, les instructions, une fois exécutées, amenant le processeur à effectuer les étapes suivantes :
l'accès, par un robot mobile (120), à des données cartographiques (300) correspondant à une zone dans laquelle se trouve le robot mobile (120), les données cartographiques (300) comprenant :
a) une couche cartographique initiale d'exclusion représentant au moins une région d'espace libre dans laquelle le robot mobile est autorisé à pénétrer et au moins une région d'exclusion dans laquelle le robot mobile n'est pas autorisé à pénétrer ; et
(b) une couche cartographique initiale de données historiques sur la poussière représentant les régions à fort taux de poussière qui ont précédemment accumulé de la poussière nécessitant des niveaux d'aspiration plus élevés que les régions à faible taux de poussière ;
faire exécuter, par le robot mobile, une ou plusieurs tâches dans la zone, dans laquelle le robot mobile navigue pour éviter d'entrer dans la au moins une région d'exclusion et le robot mobile navigue pour appliquer une aspiration supplémentaire aux régions à fort taux de poussière identifiées dans la couche cartographique initiale de données historiques sur la poussière ;
pendant l'exécution d'une ou de plusieurs tâches, détecter, par un ou plusieurs capteurs du robot mobile, une ou plusieurs régions de la zone dans laquelle le robot mobile ne peut pas naviguer, et détecter des régions à fort taux de poussière non identifiées précédemment ; mettre à jour, par le robot mobile, la couche cartographique initiale d'exclusion afin d'inclure la une ou plusieurs régions ; et
la mise à jour, par le robot mobile, de la couche cartographique initiale de données historiques sur la poussière afin d'y inclure les régions à fort taux de poussière non identifiées précédemment.

15. Support de stockage non transitoire lisible par ordinateur selon la revendication 14, dans lequel le un ou plusieurs capteurs comprennent un capteur de sol configuré pour détecter un type de sol sous le robot mobile, et dans lequel la mise à jour de la couche cartographique initiale d'exclusion comprend l'ajout d'une indication d'un type de sol détecté.
